# FASCICULE DE BREVET EUROPEEN

(11) **EP 1 348 532 B1**
(45) Date de publication et mention de la délivrance du brevet: **07.03.2007**
(21) Numéro de dépôt: 03362001.4
(22) Date de dépôt: 17.03.2003
(51) Int. Cl.: B21C 23/12, B21C 37/28, F02C 7/045

(54) **Procédé de formage d'un secteur de lèvre d'entrée d'air et dispositif pour sa mise en oeuvre**
Verfahren zum Formen eines Sektors einer Lufteinlasslippe und Vorrichtung zu deren Herstellung
Method of forming an air intake lip sector and device for applying this method

(30) Priorité: 20.03.2002 FR 0203440
(43) Date de publication de la demande: 01.10.2003
(73) Titulaire: AIRBUS France, 31060 Toulouse (FR)
(72) Inventeur: Chevalier, Lucien, 44260 La Chapelle Launay (FR)
(74) Mandataire: Thébault, Jean-Louis

(56) Documents cités:
- GB-A- 2 160 808
- NL-A- 9 300 097
- PATENT ABSTRACTS OF JAPAN vol. 008, no. 043 (M-279), 24 février 1984 (1984-02-24) & JP 58 199626 A (OKUDA KINZOKU KK), 21 novembre 1983 (1983-11-21)

## Description

La présente invention se rapporte à la fabrication de lèvres d'entrée d'air de nacelles contenant le groupe moto-propulseur, notamment un moteur à réaction, d'aéronefs.

Les nacelles comportent un capot d'entrée d'air prolongé à l'avant par une lèvre présentant en section la forme d'un U ouvert vers l'arrière.

Cette lèvre d'entrée d'air assure le partage de l'air entre la partie qui pénètre dans le canal de soufflante et la partie qui s'écoule autour de la nacelle.

Elle a une forme annulaire et est constituée de plusieurs secteurs ou segments aboutés par éclissage.

Plusieurs techniques sont utilisées pour la fabrication de tels secteurs.

C'est ainsi que l'on peut utiliser l'emboutissage classique à froid à l'aide d'une matrice, d'un poinçon et d'un serre-flan permettant par un certain nombre de passes la mise en forme d'un flan de métal approprié, généralement un alliage à base d'aluminium, dans la matrice.

Cette technique très connue et répandue présente l'inconvénient d'un recours à de nombreuses passes avec des traitements thermiques intermédiaires et entraîne une perte d'épaisseur conséquente du flan au cours de l'emboutissage.

L'emboutissage à l'aide d'une vessie peut être également employé. Il consiste par gonflage d'une vessie à déformer et enrouler autour d'un poinçon en forme une tôle tendue, l'opération s'effectuant en plusieurs passes avec des traitements thermiques intermédiaires.

Par rapport à l'emboutissage précédent, le nombre de passes est cependant réduit ainsi que la perte d'épaisseur de la tôle.

Toutefois, la forme définitive n'est pas acquise du fait d'un retour élastique important et nécessite une mise en tension de la pièce sur un autre outillage. Les outillages ainsi mis en oeuvre sont coûteux.

Suivant une autre technique possible, le repoussage, on opère à l'aide de porte-outils à vérin pour accompagner le faux rond de la forme de la lèvre. Si l'outillage est ici simple et de coût réduit et procure une bonne maîtrise des épaisseurs, on est limité à la réalisation d'entrées d'air dont le flan est capable d'être contenu dans une tôle. De plus, cette technique entraîne une chute importante de la tenue au matage impliquant une surveillance et une maintenance importantes en exploitation.

Le formage par diaphragme à chaud est aussi envisageable. La tôle à former est posée sur un poinçon en forme et contrainte d'épouser ce dernier sous la pression d'une tôle dite à propriété SPF ("Super Plastic Forming").

Une seule passe est nécessaire mais plusieurs inconvénients apparaissent liés à la maîtrise aléatoire de la forme après traitement thermique, au recours qui serait souhaitable à un outillage modélisé, et à la répétitivité incertaine du processus.

Enfin, on pourrait recourir au formage dit "Super Plastic Forming" consistant à contraindre une tôle en matériau SPF portée à température à épouser un poinçon en forme, mais l'inconvénient majeur est qu'aucun alliage léger à propriétés SPF connu ne présente les caractéristiques requises pour la réalisation d'une lèvre d'entrée d'air.

L'invention a pour objet de pallier à ces divers inconvénients des techniques connues en proposant une nouvelle technique de formage de secteurs de lèvre d'entrée d'air, à la fois simple, rapide à mettre en oeuvre, d'un coût réduit et donnant des pièces homogènes et de très bonne tenue.

A cet effet, l'invention a pour objet un procédé de formage de secteurs de lèvre d'entrée d'air de nacelle d'aéronef, à section en forme de U, selon la revendication 1.

Le courbage du profilé tubulaire en sortie de filière est assuré par la maîtrise d'avalements différenciés dans le passage matière de la filière, la conservation de la courbure après sortie de filière étant assurée soit par un dispositif fixe de guidage cintré au rayon souhaité, soit par une sortie du profilé sur un plateau rotatif équipé d'une forme.

Un tel procédé présente de nombreux et substantiels avantages.

Tout d'abord, les caractéristiques physiques de la pièce obtenue sont améliorées par le sens de fibrage privilégié du matériau dû au filage, parallèle à l'axe du secteur de lèvre.

Par ailleurs, la mise en forme en une seule opération, avec un allongement homogène, maîtrisé et quasi constant sur toute la surface de la pièce apporte :
- une tenue à la ténacité et une résistance à la propagation de fissure, favorisées,
- une épaisseur constante de la pièce après formage,
- un usinage chimique facilité (pas de disparité de structure dans le matériau),
- l'homogénéité du grain de la matière garantit un aspect cosmétique constant sur toute la surface de la pièce après oxydation anodique sulfurique, alors que toutes les techniques de formage à partir d'une tôle, à l'inverse, engendrent des disparités de contraintes qui révèlent des différences d'aspect après le traitement de surface.

Enfin, la limitation du nombre de phases pour l'obtention de la pièce permet une réduction importante du coût des pièces.

L'invention a également pour objet un dispositif pour la mise en oeuvre du procédé ci-dessus.

D'autres caractéristiques et avantages ressortiront de la description qui va suivre d'un mode de mise en oeuvre du procédé selon l'invention, description donnée à titre d'exemple uniquement et en regard des dessins annexés sur lesquels :
- la figure 1 est une vue schématique en perspective d'un moteur à réaction d'aéronef ;
- la figure 2 est une vue en coupe axiale de la lèvre d'entrée d'air du moteur de la figure 1 ;
- la figure 3 est une vue schématique en perspective d'une tête d'extrusion-filage en cours de filage d'un profilé tubulaire selon le procédé de l'invention ;
- la figure 4 est une vue de dessus d'un dispositif fixe de courbage du profilé en sortie de filière ;
- la figure 5 est une vue en bout suivant la flèche V du dispositif de la figure 4 ;
- la figure 6 est une vue de dessus d'un dispositif de courbage du profilé filé en sortie de filière, constitué d'un plateau rotatif à forme ;
- la figure 7 est une vue en bout suivant la flèche VII du dispositif de la figure 6 ;
- la figure 8 est une vue en perspective d'un profilé courbe issu du filage ;
- la figure 9 est une vue schématique d'une matrice de formage-calibrage du profilé courbe, et
- la figure 10 est une vue en coupe partielle d'une extrémité de la matrice de la figure 9.

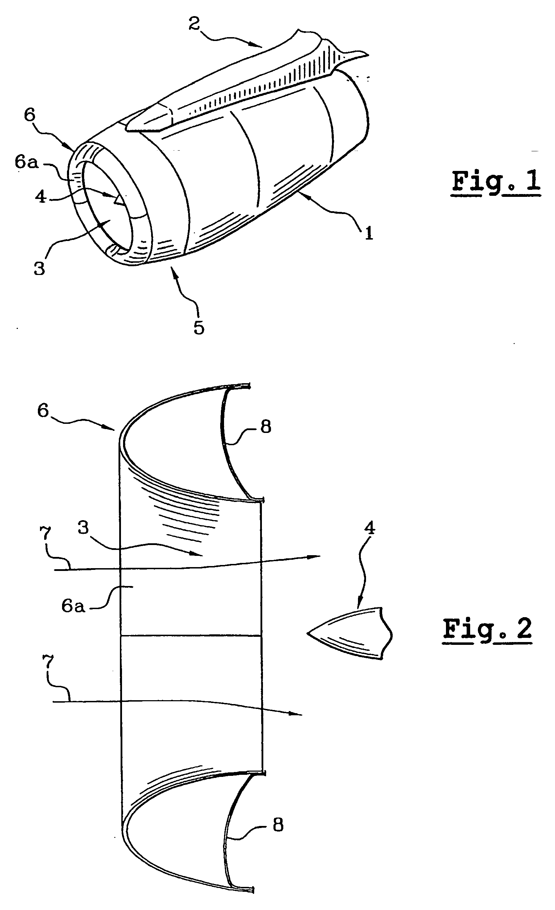

On a représenté en figure 1 un turboréacteur d'aéronef comprenant une nacelle 1 entourant coaxialement le moteur proprement dit et fixé par exemple à une aile (non représentée) de l'aéronef par l'intermédiaire d'un mât désigné d'une manière générale par la référence numérique 2.

La nacelle 1 a une section annulaire et définit entre elle et la partie centrale du moteur un canal annulaire 3 dit de soufflante. On a représenté en 4 sur la figure le nez en forme d'ogive de la soufflante entraînée par le moteur et qui est placée à l'entrée du canal.

La partie avant de la nacelle définit un capot d'entrée d'air 5 qui a pour fonction d'assurer l'écoulement aérodynamique de l'air, d'une part, vers le canal de soufflante 3 et, d'autre part, vers l'extérieur de la nacelle 1.

Comme on peut l'observer sur la figure 2 qui est une coupe axiale partielle du capot 5, ce dernier se prolonge à l'avant par une lèvre d'entrée d'air 6 présentant en section la forme d'un U ouvert vers l'arrière. Cette lèvre assure le partage de l'air entre la partie 7 qui pénètre dans le canal de soufflante et la partie qui s'écoule autour de la nacelle.

L'arrière de la lèvre 6 est fermé par une cloison interne 8.

Comme illustré par les figures 1 et 2, la lèvre 6 est généralement constituée de quatre secteurs ou segments tels que le secteur 6a, aboutés par éclissage pour former un anneau complet.

L'invention vise à réaliser un secteur de lèvre tel que le secteur 6a.

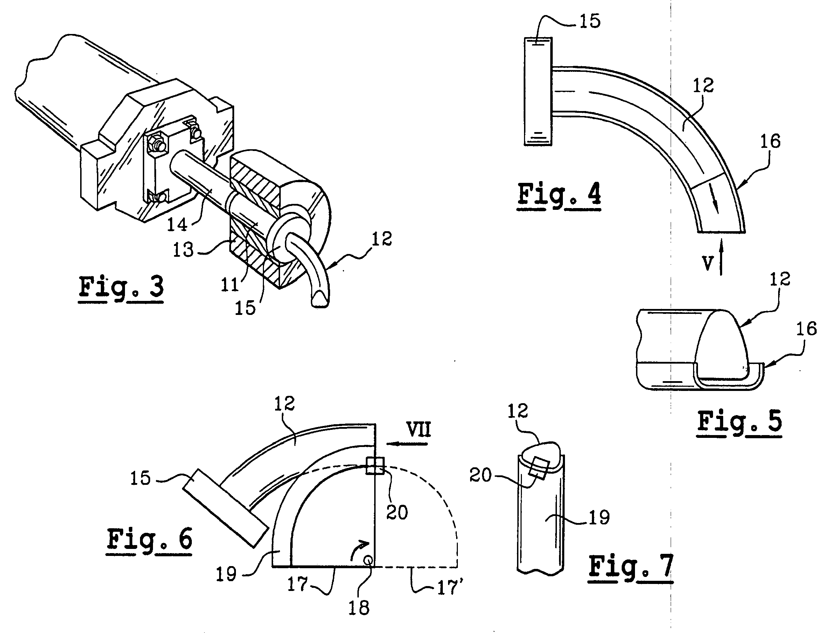

A cet effet, conformément à l'invention, on va, à partir d'une billette cylindrique représentée en 11 sur la figure 3, du matériau approprié, en l'occurrence un alliage d'aluminium spécifique, élaborer par filage à la presse un profilé tubulaire courbe schématisé en 12 sur la figure 3.

Le dispositif d'extrusion-filage utilisé est conventionnel et est illustré très schématiquement sur la figure 3 par un conteneur 13 dans lequel est introduit la billette 11 pressée par un pilon presseur 14, et une filière 15 accolée à la face de sortie du conteneur 13.

Le filage est effectué à l'aide d'une filière 15 à noyau, à chaud, notamment par pré-chauffage de la billette 11 à la température de recuit du matériau qui est en l'occurrence entre 400 et 450 °C à titre indicatif.

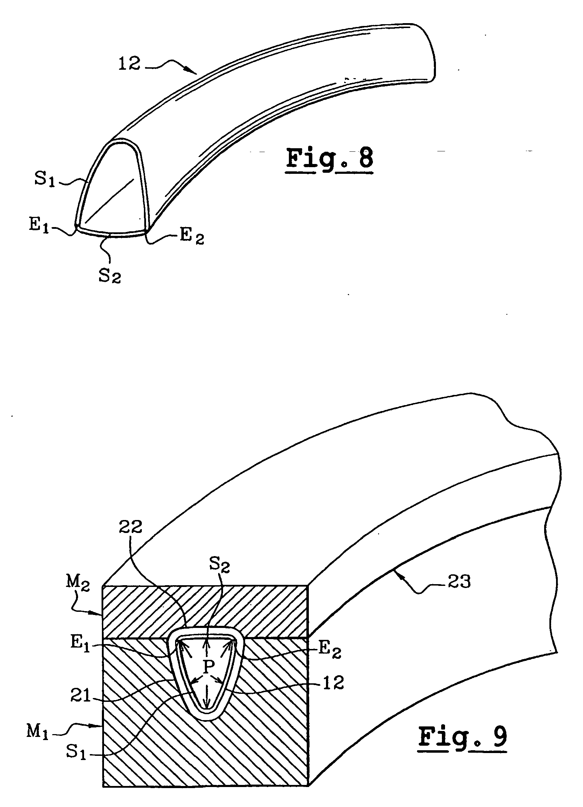

Le produit filé 12 est tubulaire, sa section étant représentée en figure 8. Cette section comprend une partie S1 en forme de U renversé sur la figure 8, correspondant à la lèvre à obtenir et un voile S2 de liaison des extrémités E1, E2 des branches du U.

La filière 15 est conçue de façon que la section du profilé 12, qui est constante, présente un développé légèrement inférieur, de l'ordre de 2 à 3 %, au développé de la section la plus faible du secteur de lèvre à obtenir, étant entendu qu'une lèvre d'entrée d'air n'est jamais un élément torique à section constante, ni à rayon de courbure constant. C'est pourquoi le rayon de courbure conféré au profilé 12 en sortie de filage sera sensiblement égal au rayon de courbure moyen du secteur de lèvre à obtenir.

La courbure conférée au profilé 12 est opérée autour d'un axe sensiblement orthogonal au plan général du voile S2, c'est-à-dire du plan contenant les extrémités E1, E2 des sections du profilé 12.

La courbure du produit filé s'obtient par exemple simplement en réglant les avalements dans le passage matière de la filière 15, c'est-à-dire en offrant à la matière une section de passage dans la filière plus importante sur une branche du U de la section que sur l'autre, en sorte que le produit filé va se gauchir du côté de la filière le plus étroit.

Ce gauchissement est ensuite canalisé par un dispositif de courbage du produit 12.

Les figures 4 et 5 illustrent un dispositif apte à ce résultat et constitué d'une simple goulotte de guidage fixe 16 montée en sortie de filière 15 et cintrée convenablement.

La longueur de la goulotte 16 dépend de celle des secteurs à obtenir et, dans le cas présent, est légèrement supérieure à un quart de circonférence.

Les figures 6 et 7 illustrent un autre dispositif susceptible d'obtenir le même résultat et constitué d'un plateau 17 monté rotatif autour d'un axe vertical 18 et portant une goulotte de guidage cintrée 19. La goulotte 19 a une courbure correspondant à celle à conférer au produit filé 12 et présente une longueur, dans le cas présent, légèrement supérieure à un quart de circonférence.

En outre, la goulotte 19 est galbée en sorte d'épouser le produit 12 sur l'un de ses flancs comme illustré par la figure 7, afin de donner au produit la courbure désirée par rotation autour de l'axe 18.

En 20 est représentée symboliquement une pince solidaire de l'une des extrémités de la goulotte 19 et apte à saisir et maintenir en place l'extrémité frontale du produit 12 au sortir de la filière 15. En 17' est schématisée la position finale du plateau rotatif 17 correspondant à une longueur de produit 12 incurvé d'un quart de circonférence.

Sur les figures 4 à 7, on n'a pas représenté les moyens de tronçonnage du produit filé 12 pour obtenir des secteurs d'un quart de circonférence tels que celui de la figure 8.

Dans une deuxième étape du procédé de l'invention, le secteur 12 de la figure 8 est placé dans une matrice courbe de formage et calibrage en deux parties, illustrée en figure 9.

La matrice comprend une partie M1 comportant une empreinte 21 recevant la partie S1 de la section du profilé 12 de la figure 8.

L'empreinte 21 de la matrice M1 est fermée par une matrice M2 comportant une empreinte 22 correspondant à la section S2 du profilé 12, les extrémités E1, E2 des branches du U de la section du profilé 2 se trouvant sensiblement à hauteur du plan de joint 23 des deux parties de matrice M1, M2.

Comme on peut l'observer sur la figure 9 qui montre le profilé 12 en place dans la matrice avant l'envoi d'un fluide hydraulique sous une pression P à l'intérieur du profilé, il existe un intervalle entre la paroi externe du profilé 12 et l'empreinte 21, 22. Le rôle du fluide sous la pression P qui est par exemple de l'ordre de 400 à 500 bars, est de plaquer la paroi du profilé 12 contre l'empreinte.

Le volume défini en particulier par l'empreinte 21 correspond au volume extérieur du secteur de lèvre à obtenir augmenté du retour élastique du matériau expansé du profilé 12.

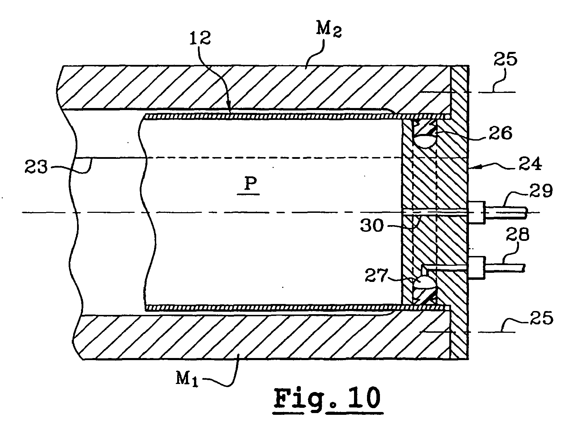

La figure 10 représente l'une des extrémités de la matrice qui est ouverte à ses deux extrémités et reçoit un dispositif de fermeture constitué d'un flasque bouchon 24 fixé de manière amovible en 25 sur les deux parties de matrice M1, M2.

Chaque extrémité du profilé 12 est maintenue plaquée contre la paroi interne de la matrice M1, M2 à l'aide d'un joint annulaire 26 pressé par un fluide sous pression appropriée acheminé dans une gorge annulaire 27 par une canalisation 28, cependant que la pression P à l'intérieur du profilé 12 est appliquée par un fluide hydraulique acheminé par une canalisation 29 et un perçage 30 traversant l'un des flasques 24.

A sa sortie de la matrice, le profilé 12 qui a pris la forme du secteur de lèvre souhaité est découpé aux dimensions, à la fois aux deux extrémités et au droit des repères E1 et E2 délimitant le bord extrême des branches du U de la lèvre, sur toute la longueur du secteur qui est alors exactement aux formes et dimensions recherchées.

Le procédé est bien entendu adaptable à la réalisation de secteurs inférieurs ou supérieurs à 90°, il suffit d'adapter les outillages (dispositif de courbage du profilé en sortie de filière et matrice de formage calibrage) en conséquence.

## Revendications

1. Procédé de formage de secteurs de lèvre d'entrée d'air (6) de nacelle d'aéronef, à section en forme de U, **caractérisé en ce qu'**il consiste :
à élaborer, à partir d'une billette cylindrique (11) d'un matériau approprié, par filage à chaud à la presse, un profilé tubulaire (12) de section comprenant une partie (S1) en forme de U correspondant à la lèvre à obtenir et un voile (S2) de liaison des extrémités (E1, E2) des branches du U, la partie de section (S1) formée dudit profilé (12) ayant un développé inférieur de quelques pour cent au développé de la plus faible section du secteur de lèvre (6) à obtenir,
- à conférer au profilé (12) au fur et à mesure de sa sortie de filière (15) une courbure dont le rayon est sensiblement égal au rayon de courbure moyen dudit secteur,
- puis à former et calibrer le profilé (12) aux formes définitives du secteur par expansion hydraulique dans une matrice (M1, M2) dont l'intérieur correspond au volume extérieur dudit secteur augmenté du retour élastique du matériau à expanser,
- et enfin, à découper le produit tubulaire ainsi formé pour isoler la partie à section en U constituant ledit secteur de lèvre.

2. Procédé suivant la revendication 1, **caractérisé en ce que** le courbage du profilé tubulaire (12) en sortie de filière (15) est réalisé par la maîtrise d'avalements différenciés dans le passage matière de la filière, la conservation de la courbure après sortie de filière étant réalisée par un dispositif de guidage approprié.

3. Dispositif pour la mise en oeuvre du procédé selon la revendication 1 ou 2, **caractérisé en ce qu'**il comprend :
- un dispositif (13 à 15) d'extrusion-filage,
- des moyens (16 ; 17 à 20) agencés en sortie de filière (15) pour conférer au produit filé (12) une courbure appropriée,
- et une matrice de formage calibrage dudit produit filé (12).

4. Dispositif suivant la revendication 3, **caractérisé en ce que** lesdits moyens de courbage du produit filé (12) sont constitués d'une goulotte de guidage cintrée fixe (16).

5. Dispositif suivant la revendication 3, **caractérisé en ce que** lesdits moyens de courbage du produit filé (12) sont constitués par un plateau rotatif (17) portant une goulotte de guidage cintrée (19) dont la forme épouse le flanc du produit filé (12) et qui est munie à une extrémité d'une pince (20) de saisie de l'extrémité frontale dudit produit filé.

6. Dispositif suivant l'une des revendications 3 à 5, **caractérisé en ce que** la matrice est en deux parties (M1, M2), l'une (M1) comportant une empreinte (21) correspondant à la partie de section en U (S1) du produit filé tubulaire (12) et l'autre (M2) comportant une empreinte (22) correspondant à la partie de section restante (S2) dudit produit (12).

7. Dispositif suivant la revendication 6, **caractérisé en ce que** les deux parties de matrice assemblées (M1, M2) sont fermées aux extrémités par un flasque bouchon (24) de serrage des extrémités du produit filé (12) à expanser, l'un des flasques étant muni d'un conduit (30) d'introduction d'un fluide hydraulique sous pression à l'intérieur dudit produit (12).

## Claims

1. Method of forming air inlet lip sectors (6) for an aircraft nacelle, with a U-shaped cross section, **characterised in that** it comprises:
- producing, from a cylindrical billet (11) of an appropriate material, by hot extrusion on a press, a tubular profiled member (12) with a cross section comprising a U-shaped part (S1) corresponding to the lip to be obtained and a web (S2) for connecting the ends (E1, E2) of the arms of the U, the formed cross section part (S1) of the said profiled member (12) having an evolute less by a few percent than the evolute of the smallest cross section of the lip sector (6) to be obtained,
- conferring on the profiled member (12), gradually as it leaves the die (15), a curvature whose radius is substantially equal to the mean radius of curvature of said sector,
- then forming and calibrating the profiled member (12) to the definitive shapes of the sector by hydraulic expansion in a shaper (M1, M2), the inside of which corresponds to the external volume of said sector increased by the elastic return of the material to be expanded,
- and finally cutting the tubular product as formed in order to isolate the part with a U-shaped cross section constituting said lip sector.

2. Method according to claim 1, **characterised in that** the curvature of the tubular profiled member (12) on emerging from the die (15) is produced by the control of differentiated amounts of material passing through the die, the curvature after leaving the die being kept by an appropriate guidance device.

3. Device for implementing the method according to claim 1 or 2, **characterised in that** it comprises:
- an extrusion/spinning device (13 to 15),
- means (16; 17 to 20) arranged at the discharge from the die (15) for conferring appropriate curvature on the extruded product (12),
- and a shaper for the calibrated forming of the said extruded product (12).

4. Device according to claim 3, **characterised in that** said means of curving the extruded product (12) consists of a fixed curved guidance spout (16).

5. Device according to claim 3, **characterised in that** said means of curving the extruded product (12) is formed by a rotary plate (17) carrying a curved guidance spout (19), the shape of which matches the flank of the extruded product (12) and which is provided at one end with a clamp (20) for gripping the front end of said extruded product,

6. Device according to one of claims 3 to 5, **characterised in that** the shaper is made from two parts (M1, M2), one (M1) comprising a cavity (21) corresponding to the U-shaped cross section part (S1) of the tubular extruded product (12) and the other (M2) comprising a cavity (22) corresponding to the remaining cross section part (S2) of said product (12).

7. Device according to claim 6, **characterised in that** the two assembled shaper parts (M1, M2) are closed at the ends by a plug flange (24) gripping the ends of the extruded product (12) to be expanded, one of the flanges being provided with a conduit (30) for introducing a pressurised hydraulic fluid in said product (12).

## Patentansprüche

1. Verfahren zum Formen von Lufteintrittslippen-Sektoren (6) von Flugzeuggondeln mit U-förmigem Querschnitt, **dadurch gekennzeichnet, dass** es darin besteht:
- ausgehend von einem zylindrischen Rohling (11) aus einem geeigneten Werkstoff durch Warmstrangpressen mit der Presse ein rohrförmiges Profil (12) herzustellen, das einen Querschnitt besitzt, der einen U-förmigen Abschnitt (S1), der der zu erhaltenden Lippe entspricht, und eine Abdeckung (S2) zum Verbinden der Enden (E1, E2) der Schenkel des U umfasst, wobei der geformte Querschnittsabschnitt (S1) des Profils (12) eine Abwicklung hat, die um einige Prozent kleiner als die Abwicklung des kleinsten Querschnitts des zu erhaltenden Lippensektors (6) ist,
- dem Profil (12) nach Maßgabe seines Mundstücks (15) eine Krümmung zu verleihen, deren Radius im Wesentlichen gleich dem mittleren Krümmungsradius des Sektors ist,
- dann das Profil (12) in die endgültigen Formen des Sektors durch hydraulische Expansion in einer Matrize (M1, M2) zu formen und zu kalibrieren, deren Innenraum dem äußeren Volumen des Sektors, erhöht um die elastische Rückstellung des zu expandierenden Werkstoffs, entspricht,
- und schließlich das auf diese Weise gebildete rohrförmige Produkt auszustanzen, um den den Lippensektor bildenden Teil mit U-Querschnitt abzutrennen.

2. Verfahren nach Anspruch 1, **dadurch gekennzeichnet, dass** die Krümmung des rohrförmigen Profils (12) am Ausgang des Mundstücks (15) durch die Steuerung unterschiedlicher Abteufungen in dem Werkstoffkanal des Mundstücks verwirklicht wird, wobei die Beibehaltung der Krümmung nach dem Verlassen des Mundstücks durch eine geeignete Führungsvorrichtung verwirklicht wird.

3. Vorrichtung zum Ausführen des Verfahrens nach Anspruch 1 oder 2, **dadurch gekennzeichnet, dass** sie umfasst:
- eine Extrusions-Strangpress-Vorrichtung (13 bis 15),
- Mittel (16; 17 bis 20), die am Ausgang des Mundstücks (15) angeordnet sind, um dem stranggepressten Produkt (12) eine geeignete Krümmung zu verleihen,
- und eine Matrize zum kalibrierten Formen des stranggepressten Produkts (12).

4. Vorrichtung nach Anspruch 3, **dadurch gekennzeichnet, dass** die Mittel zum Krümmen des stranggepressten Produkts (12) durch eine feste, zylindrisch gebogene Führungsrinne (16) gebildet sind.

5. Vorrichtung nach Anspruch 3, **dadurch gekennzeichnet, dass** die Mittel zum Krümmen des stranggepressten Produkts (12) durch eine drehbare Platte (17) gebildet sind, die eine zylindrisch gebogene Führungsrinne (19) trägt, deren Form sich an die Seitenwand des stranggepressten Produkts (12) anschmiegt und die an einem Ende mit einer Klaue (20) zum Ergreifen des vorderen Endes des stranggepressten Produkts versehen ist.

6. Vorrichtung nach einem der Ansprüche 3 bis 5, **dadurch gekennzeichnet, dass** die Matrize aus zwei Teilen (M1, M2) besteht, wovon einer (M1) einen Stempel (21) aufweist, der dem Abschnitt mit U-Querschnitt (S1) des röhrenförmigen Strangpressprodukts (12) entspricht, und der andere (M2) einen Stempel (22) aufweist, der dem Abschnitt mit verbleibendem Querschnitt (S2) des Produkts (12) entspricht.

7. Vorrichtung nach Anspruch 6, **dadurch gekennzeichnet, dass** die zwei zusammengefügten Matrizenteile (M1, M2) an den Enden durch einen Stopfenflansch (24) zum Einklemmen der Enden des zu expandierenden stranggepressten Produkts (12) verschlossen sind, wobei einer der Flansche mit einer Leitung (30) zum Einleiten von mit Druck beaufschlagtem Hydraulikfluid in den Innenraum des Produkts (12) versehen ist.
